# FASCICULE DE BREVET EUROPEEN

(11) **EP 2 785 974 B1**
(45) Date de publication et mention de la délivrance du brevet: **07.06.2023**
(21) Numéro de dépôt: 12791492.7
(22) Date de dépôt: 28.11.2012
(51) Int. Cl.: E21D 9/00, G01C 15/00

(54) **MIRE DE GUIDAGE D'UN TUNNELIER**
NIVELLIERVORRICHTUNG ZUR FÜHRUNG EINER TUNNEBOHRMASCHINE
LEVELING INSTRUMENT FOR GUIDING A TUNNEL-BORING MACHINE

(30) Priorité: 28.11.2011 FR 1160854
(43) Date de publication de la demande: 08.10.2014
(73) Titulaire: Bouygues Travaux Publics, 78280 Guyancourt (FR)
(72) Inventeur: MOULIN, Pierre, F-91190 Gif Sur Yvette (FR)
(74) Mandataire: Regimbeau
(86) Numéro de dépôt international: PCT/EP2012/073864
(87) Numéro de publication internationale: WO 2013/079548

(56) Documents cités:
- EP-A1- 1 703 300
- EP-A1- 1 710 602
- EP-A1- 1 710 602
- WO-A2-2004/019459
- FR-A1- 2 741 149
- FR-A1- 2 741 149
- GB-A- 2 143 396
- GB-A- 2 143 396

## Description

### DOMAINE DE L'INVENTION

La présente invention concerne une mire pour le guidage d'un tunnelier et un dispositif de guidage d'un tunnelier incorporant une telle mire.

### ARRIERE PLAN DE L'INVENTION

Le guidage d'un tunnelier nécessite une connaissance précise, en temps réel, de la position du tunnelier par rapport au tracé théorique du tunnel, en vue de respecter au mieux le tracé prévu dudit tunnel.

Le perçage du tunnel est mis en oeuvre en mettant en place au fur et à mesure des anneaux de béton qui constituent des tranches élémentaires du revêtement du tunnel.

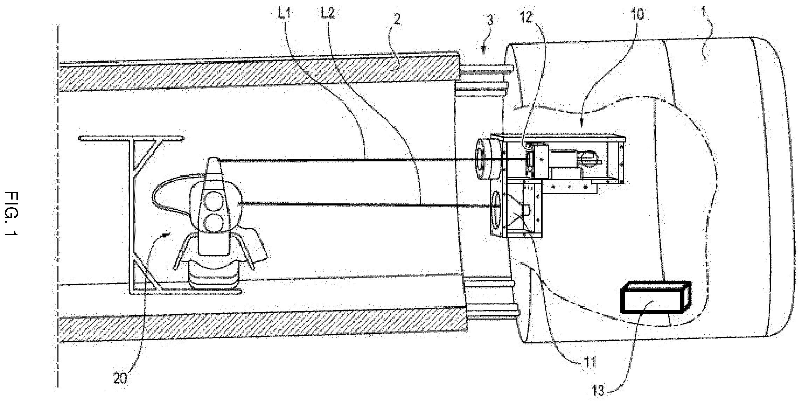

Pour guider le tunnelier, il est connu, comme illustré à la figure 1, de mettre en place une station totale 20 sur l'anneau 2 à l'extrémité duquel agit le tunnelier 1.

L'anneau 2 supporte des vérins de poussée 3 assurant l'avancement du tunnelier 1.

La station totale 20 est fixe par rapport à l'anneau 2 et ses coordonnées dans l'espace sont connues.

La station totale 20 est un théodolite apte à mesurer des distances. Elle comprend une lunette montée à la fois sur un axe horizontal et sur un axe vertical.

Le tunnelier 1 est quant à lui équipé d'une mire 10 qui est visée par la station totale pour déterminer les coordonnées du tunnelier.

Pour connaître complètement la position du tunnelier, il est nécessaire de déterminer non seulement les coordonnées dans l'espace de la mire 10 mais aussi les angles de tangage, de lacet et de roulis du tunnelier.

A cet effet, la mire 10 comprend un prisme réfléchissant 11 dont la forme est connue, ainsi qu'un capteur angulaire 12, qui est agencé ici au-dessus du prisme 11 le long d'un axe vertical.

La station totale est équipée d'un premier laser de visée qui vise le prisme 11 (premier faisceau L1).

La visée effectuée par ce premier laser permet, par comparaison du faisceau incident et du faisceau réfléchi par le prisme, de déterminer les coordonnées du centre du prisme.

Pour mesurer les angles de tangage et de lacet, la station totale 20 est équipée d'un second laser, déporté par rapport au premier, qui émet un second faisceau L2 parallèle au premier faisceau L1 et qui vise le capteur angulaire 12.

Enfin, pour mesurer l'angle de roulis du tunnelier, un capteur d'angle de roulis 13 est agencé sur le tunnelier 1.

Cependant, un inconvénient de ce système est qu'il nécessite d'installer sur la station totale un laser déporté par rapport au laser de visée qui équipe de manière standard la station totale.

Outre le coût de ce laser déporté, sa mise en place nécessite de modifier structurellement la station totale telle que disponible sur le marché.

Elle nécessite notamment, de la part de l'utilisateur du tunnelier, une intervention pour fixer le laser déporté, ainsi que des réglages et des vérifications régulières de l'alignement du second faisceau par rapport au premier faisceau.

Par ailleurs, l'installation du laser déporté suppose l'emploi de câbles d'alimentation.

Or, la station totale est périodiquement contrôlée au moyen d'un double retournement : après une première visée qui permet de mesurer la position de la mire, on procède à un double retournement (c'est-à-dire à 180° selon l'axe vertical et selon l'axe horizontal) de la station totale et l'on procède à une seconde visée, afin de vérifier si la position de la mire mesurée avec cette seconde visée est identique à la première mesure.

Les câbles ajoutés pour l'installation du laser déporté entravent donc ce double retournement.

Pour éviter l'installation d'un laser déporté sur la station totale, il a été proposé d'utiliser un laser coaxial qui vise une mire dans laquelle le prisme et le capteur angulaire sont alignés dans deux plans parallèles sur l'axe du faisceau laser.

Dans ce cas, il est nécessaire d'employer un laser de forte puissance pour traverser le premier plan (du prisme), qui est translucide, et atteindre le second plan (du capteur).

Cependant, un tel laser est plus onéreux et son utilisation est plus risquée du fait de sa forte puissance.

Il pourrait être envisagé également d'équiper la mire de plusieurs prismes et de viser lesdits prismes successivement au moyen d'un unique laser.

Cependant, en raison des importantes vibrations qui se produisent lors du fonctionnement du tunnelier, l'information déduite des mesures effectuées sur les différents prismes serait, en raison du décalage temporel entre ces mesures, imprécise.

Le document US 2006/0222,314 divulgue une mire de guidage comprenant un prisme réfléchissant. Contrairement aux prismes conventionnels, qui sont conformés en coin de cube, et dans lesquels le sommet dudit coin définit le centre du prisme, pour lequel le faisceau incident du laser de visée est réfléchi parallèlement audit faisceau incident, le centre du prisme est percé d'un orifice derrière lequel est agencé un capteur angulaire.

Le diamètre dudit orifice est de l'ordre de quelques dixièmes de millimètres et est inférieur au diamètre du faisceau laser.

Ainsi, lorsque le faisceau incident frappe le centre du prisme, la partie centrale dudit faisceau traverse l'orifice et vient frapper le capteur angulaire, tandis que la partie annulaire du faisceau entourant ladite partie centrale est réfléchie par les parois du prisme et renvoyée vers la station totale.

Cependant, ce dispositif présente plusieurs inconvénients.

D'une part, le fait que le prisme soit percé en son centre rend impossible la détermination d'une unique position de son centre, mais fournit une pluralité de solutions possibles à la minimisation de la distance entre le faisceau incident et le faisceau réfléchi.

D'autre part, en raison du faible diamètre de l'orifice et des importantes vibrations auxquelles est soumise la mire lors du fonctionnement du tunnelier, le capteur angulaire n'est frappé par le faisceau laser (et est donc en mesure de fournir une valeur d'angle) que lorsque celui-ci est dirigé précisément vers le centre du prisme. En revanche, le capteur angulaire ne peut fournir aucune mesure d'angle pendant toute la phase de recherche du centre, où le faisceau laser ne frappe pas le centre du prisme.

Enfin, même lorsqu'une partie du faisceau incident traverse l'orifice et atteint le capteur angulaire, le diamètre de l'orifice est tellement faible qu'il génère des phénomènes de diffraction qui pénalisent la précision de la mesure d'angle.

Le document WO 2004/019459 décrit une mire comportant un prisme agencé pour réfléchir un faisceau incident de sorte que le faisceau réfléchi soit parallèle au faisceau incident, un capteur angulaire et un organe séparateur de faisceau optique adapté pour diviser un faisceau incident en deux faisceaux de même forme que le faisceau incident et de directions divergentes, ledit organe séparateur de faisceau étant agencé de sorte à séparer le faisceau incident entre un premier faisceau dirigé vers le prisme et un second faisceau dirigé vers le capteur angulaire et à renvoyer le faisceau réfléchi par le prisme parallèlement au faisceau incident, le capteur angulaire étant configuré pour déterminer un angle de lacet et un angle de tangage au moyen d'une même visée du prisme par un laser, ladite mire comprenant un inclinomètre configuré pour mesurer un angle de roulis.

Le document FR2741149 décrit un tunnelier équipé d'une cible de visée qui reçoit un rayon lumineux d'un émetteur de rayon laser positionné fixement à l'extérieur du tunnelier.

Il existe donc un besoin de concevoir un dispositif de guidage d'un tunnelier qui permette de s'affranchir des inconvénients des systèmes précités.

Notamment, ce dispositif de guidage devrait être conçu de sorte à permettre, en une seule visée, de connaître de manière précise la position du tunnelier, sans imposer de modification structurelle de la station totale telle que disponible sur le marché.

Par ailleurs, ce dispositif de guidage devrait fournir des informations sur la distance et sur l'orientation du tunnelier à chaque instant, y compris au cours de la phase de recherche du centre du prisme.

Ce dispositif de guidage devrait également permettre d'utiliser un laser de visée de faible puissance.

Enfin, ce dispositif de guidage devrait être robuste et moins onéreux que les dispositifs existants.

### BREVE DESCRIPTION DE L'INVENTION

Conformément à l'invention, il est proposé un dispositif de guidage d'un tunnelier, selon la revendication 1.

Un tel dispositif permet, grâce à une unique visée d'un laser, d'obtenir les informations nécessaires pour connaître à la fois la position et les angles de lacet et de tangage du tunnelier.

Par séparation de faisceau, on entend le fait de diviser un faisceau incident en deux faisceaux de même forme que le faisceau incident et de directions divergentes.

Le terme « organe séparateur de faisceau » désigne donc tout organe adapté pour remplir cette fonction.

Selon un mode de réalisation de l'invention, l'organe séparateur de faisceau est une lame séparatrice.

De manière alternative, l'organe séparateur de faisceau est un prisme adapté pour séparer un faisceau incident en deux faisceaux symétriques.

De préférence, la surface de l'organe séparateur de faisceau est au moins égale à la surface du prisme, de sorte que pendant la phase de recherche du centre du prisme le faisceau laser incident frappe l'organe séparateur avant d'atteindre le prisme.

De manière particulièrement avantageuse, ledit laser présente une faible puissance, c'est-à-dire une puissance inférieure ou égale à celle d'un laser de classe 2, sans danger pour l'oeil humain.

L'invention concerne également un procédé de guidage d'un tunnelier selon la revendication 5.

### BREVE DESCRIPTION DES DESSINS

D'autres caractéristiques et avantages de l'invention ressortiront de la description détaillée qui va suivre, en référence aux dessins annexés sur lesquels :
- la figure 1 est une illustration d'un dispositif de guidage connu,
- la figure 2 est une illustration schématique d'un mode de réalisation de la mire selon l'invention,
- la figure 3 est une vue en perspective d'une mire selon un mode de réalisation de l'invention,
- la figure 4 est une illustration d'un dispositif de guidage selon un mode de réalisation de l'invention.

Il est précisé que, pour faciliter la visualisation des différents éléments, les figures ne sont pas représentatives des échelles respectives du tunnelier, de la station totale et de la mire.

### DESCRIPTION DETAILLEE DE L'INVENTION

On décrira, dans cet exemple non limitatif, un mode de réalisation d'une mire selon l'invention et un dispositif de guidage comprenant ladite mire.

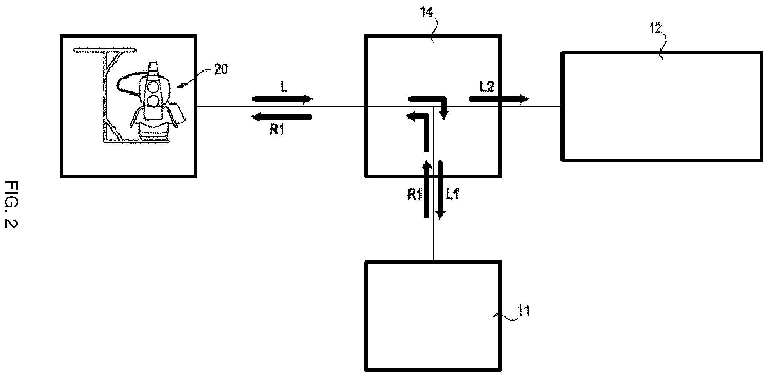

En référence à la figure 2, la mire 10 comprend un prisme 11 dont la forme est connue.

Ainsi, la réflexion d'un faisceau optique sur le prisme 11 permet de déterminer les coordonnées dans l'espace du centre du prisme.

Par exemple, le prisme est conformé selon un coin de cube et la station totale cherche le centre du prisme correspondant au sommet du coin de cube en comparant le faisceau incident du laser de visée avec le faisceau réfléchi par le prisme. En effet, ce n'est que lorsque le faisceau incident frappe le centre du prisme que le faisceau réfléchi revient parallèlement au faisceau incident ; en revanche, plus le faisceau incident frappe le prisme en un point éloigné du centre, plus les faisceaux incident et réfléchi divergent.

La conformation de ce prisme conventionnel est donc telle qu'elle fournit un unique jeu de coordonnées du centre du prisme lorsque le centre est frappé par le faisceau laser.

La mire comprend également un capteur angulaire 12.

Le capteur 12 est propre à mesurer l'angle d'incidence d'un faisceau lumineux qui est émis dans sa direction.

La mire comprend également un organe séparateur de faisceau optique 14.

L'organe séparateur de faisceau 14 est agencé de sorte à recevoir le faisceau émis par le laser de visée de la station totale et à le séparer en un premier faisceau visant le prisme 11 et un second faisceau visant le capteur angulaire 12 et à renvoyer le faisceau réfléchi par le prisme 11 parallèlement au faisceau incident.

L'organe séparateur de faisceau 14 peut être par exemple une lame séparatrice.

Dans ce cas, la lame séparatrice est orientée selon un angle de sensiblement 45° par rapport à l'orientation du faisceau incident.

De manière alternative, l'organe séparateur de faisceau peut être un prisme agencé de sorte à séparer le faisceau incident en deux faisceaux sensiblement symétriques.

Le schéma de la figure 2 est purement illustratif et il va de soi que l'on pourra faire varier, indépendamment l'une de l'autre, les distances du capteur angulaire 12 et du prisme 11 par rapport à l'organe séparateur 14, et/ou inverser les emplacements du capteur 12 et du prisme 11, sans pour autant sortir de la portée de la présente invention.

Grâce à l'organe séparateur de faisceau, il est possible, au moyen d'un seul faisceau laser de faible puissance, d'impacter le prisme 11 et le capteur angulaire 12.

De manière particulièrement avantageuse, la surface de l'organe séparateur est suffisamment grande pour être continuellement frappée par le laser pendant la phase de recherche du centre du prisme, de sorte à assurer le suivi du prisme tout en permettant l'obtention en continu d'une mesure d'angle par le capteur angulaire.

En effet, la phase de recherche du centre du prisme peut être longue compte tenu des vibrations intenses auxquelles est soumise la mire, et il peut donc être utile de disposer de mesures d'angles non seulement lorsque le laser vise le centre du prisme, mais également pendant cette phase de recherche.

L'organe séparateur de faisceau est en outre agencé de sorte à transmettre le faisceau réfléchi par le prisme 11 dans une direction parallèle à la direction du faisceau incident, de manière que le faisceau réfléchi soit reçu par la station totale et qu'un traitement permette d'en déduire la position du prisme et donc celle du tunnelier.

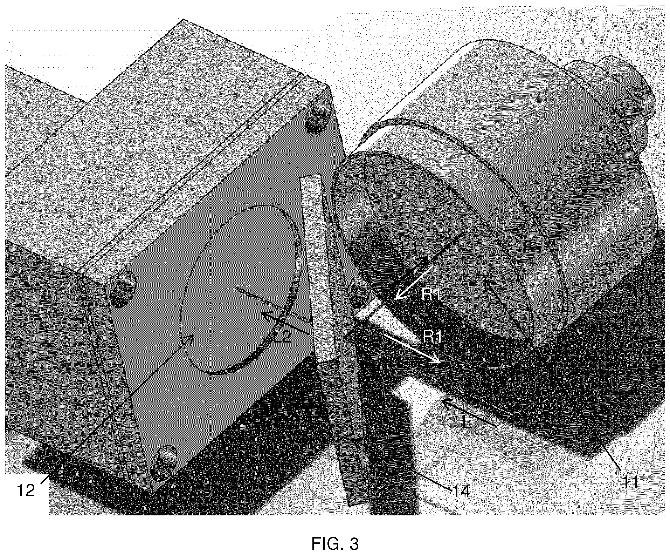

La figure 3 illustre une forme particulière de réalisation de la mire.

Comme on peut le voir sur cette figure, le capteur angulaire 12 et le prisme 11 sont agencés à angle droit l'un par rapport à l'autre, et l'organe séparateur de faisceau 14 est une lame séparatrice inclinée de 45° entre le capteur 12 et le prisme 11.

Dans ce cas, le faisceau incident L est séparé en un faisceau L1 de même direction allant directement frapper le capteur angulaire 12 et en un faisceau L2 dévié en direction du prisme 11.

Naturellement, on pourrait intervertir les positions du prisme et du capteur angulaire par rapport à la lame séparatrice sans sortir du cadre de l'invention.

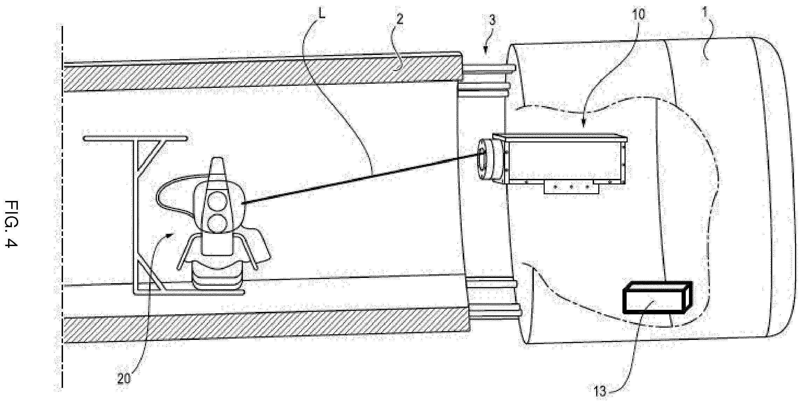

Le dispositif de guidage du tunnelier utilisant ladite mire 10 est schématisé à la figure 4.

La mire 10 décrite ci-dessus est agencée sur le tunnelier 1.

La mise en place de la mire 10 est réalisée de préférence par bridage et boulonnage sur le corps du tunnelier, qui est l'élément dont on souhaite connaître en temps réel la position et les angles.

La mire 10 est positionnée dans une fenêtre laser, c'est-à-dire un volume courant sur toute la longueur du train suiveur du tunnelier, dans l'axe de la station totale, à l'intérieur duquel sont susceptibles de circuler des faisceaux laser ; la fenêtre laser correspond donc à un volume dans lequel tout équipement est exclu.

Pour déterminer l'angle de roulis, le tunnelier 1 est également équipé d'un capteur d'angle de roulis 13, qui est connu en lui-même.

Ledit capteur 13 peut consister par exemple en un inclinomètre.

Eventuellement, l'angle de tangage peut être mesuré par un autre moyen que la mire et la station totale, par exemple par un inclinomètre.

La station totale 20 est placée à un emplacement fixe connu sur l'anneau 2.

La station totale 20 est équipée de manière classique d'un laser qui vise la mire 10.

Ledit laser peut être un laser de suivi (ou « tracking » selon la terminologie anglo-saxonne) ou de mesure de distance.

Eventuellement, la station totale peut être équipée à la fois d'un laser de suivi et d'un laser de mesure de distance.

De manière alternative, la station totale peut comprendre un unique laser remplissant à la fois la fonction de suivi et de mesure de distance.

On peut employer pour la mise en oeuvre du guidage toute station totale du marché, sans qu'il soit nécessaire de modifier sa structure ou d'y ajouter un nouveau laser.

Le laser de suivi ou de mesure de distance de la station totale 20 émet un faisceau L en direction de la mire 10.

Plus précisément, le faisceau L frappe en premier lieu l'organe séparateur de faisceau 14.

Ledit faisceau incident L est séparé par l'organe séparateur 14 en un faisceau L1 dirigé vers le prisme 11 et un faisceau L2 dirigé vers le capteur angulaire 12.

Le prisme réfléchit le faisceau incident qui est renvoyé, par l'intermédiaire de l'organe séparateur 14, vers la station totale (faisceau R1).

Une adaptation du calculateur de la station totale est réalisée pour tenir compte du déphasage lors du passage du faisceau incident et du faisceau réfléchi à travers l'organe séparateur de faisceau.

La station totale peut alors assurer le suivi du prisme, la mesure de la distance et la détermination des coordonnées de celui-ci comme si la station totale effectuait une visée directe sur le prisme.

Une unique visée permet donc de connaître la position et l'orientation du tunnelier.

Grâce à la mire, on peut employer une station totale du marché sans la modifier structurellement et, par une unique visée, connaître la position et l'orientation du tunnelier (en lacet et, le cas échéant en tangage).

La mise en oeuvre du dispositif de guidage est donc notablement simplifiée par rapport à celle des dispositifs de l'état de la technique.

En particulier, la vérification de la station totale au moyen d'un double retournement est aisément réalisable.

Par ailleurs, le dispositif de guidage est également moins onéreux puisque l'on utilise un unique laser de faible puissance.

En outre, la mire permet une mesure en continu par le capteur angulaire, même lorsque la mise au point du laser sur le centre du prisme est longue ou difficile à obtenir.

Enfin, cette mesure angulaire n'est pas obtenue au détriment de la mesure de la position du centre du prisme, le prisme étant un prisme conventionnel permettant une mesure précise.

Les coordonnées de la mire et les angles de tangage, de lacet et de roulis sont transmis à un calculateur qui les traite pour en déduire, par exemple, une déviation par rapport à une position et une orientation théoriques du tunnelier.

Le cas échéant, on peut corriger la déviation pour se rapprocher du tracé théorique du tunnel en modifiant la consigne d'actionnement du tunnelier.

Enfin, il va de soi que les exemples que l'on vient de donner ne sont que des illustrations particulières en aucun cas limitatives quant aux domaines d'application de l'invention.

## Revendications

1. Dispositif de guidage d'un tunnelier (1), comprenant
• un corps de tunnelier,
• une mire (10) rigidement liée au corps de tunnelier, comportant :
- un prisme (11) agencé pour réfléchir un faisceau incident de sorte que le faisceau réfléchi soit parallèle au faisceau incident,
- un capteur angulaire (12), et
- un organe séparateur de faisceau optique (14) adapté pour diviser un faisceau incident en deux faisceaux de même forme que le faisceau incident et de directions divergentes, ledit organe séparateur de faisceau étant agencé de sorte à séparer le faisceau incident (L) entre un premier faisceau (L1) dirigé vers le prisme (11) et un second faisceau (L2) dirigé vers le capteur angulaire (12) et à renvoyer le faisceau (R1) réfléchi par le prisme (11) parallèlement au faisceau incident,
• une station totale installée sur un anneau d'un tunnel, comprenant un laser de de suivi et/ou de mesure de distance configuré pour viser le prisme et le capteur angulaire, l'organe séparateur de faisceau de la mire étant agencé en amont du prisme sur le trajet du faisceau émis par le laser, ladite station totale étant configurée pour déterminer une position du prisme et le capteur angulaire étant configuré pour déterminer un angle de lacet et un angle de tangage du corps de tunnelier au moyen d'une même visée du prisme par le laser,
• un inclinomètre (13) monté sur le corps de tunnelier, ledit inclinomètre étant configuré pour mesurer l'angle de roulis dudit corps,
• un calculateur configuré pour :
- déterminer, à partir des angles de lacet, de tangage et de roulis du corps de tunnelier et de la position du prisme, une position et une orientation du corps de tunnelier, et
- déterminer une déviation de la position et de l'orientation du corps de tunnelier par rapport à une position et une orientation théoriques.

2. Dispositif de guidage selon la revendication 1, **caractérisé en ce que** l'organe séparateur de faisceau est une lame séparatrice.

3. Dispositif de guidage selon la revendication 1, **caractérisé en ce que** l'organe séparateur de faisceau est un prisme adapté pour séparer un faisceau incident en deux faisceaux symétriques.

4. Dispositif selon l'une des revendications 1 à 3, **caractérisé en ce que** le laser de suivi et/ou de mesure de distance de la station totale présente une puissance inférieure ou égale à la puissance d'un laser de classe 2.

5. Procédé de guidage d'un tunnelier mettant en oeuvre le dispositif de guidage selon l'une des revendications 1 à 4, comprenant les étapes de :
- installation de la station totale (20) sur un anneau (2) du tunnel, dans une position connue,
- installation de la mire (10) et de l'inclinomètre (13) sur le tunnelier (1), de sorte que la mire (10) puisse être visée par le laser équipant la station totale (20), l'organe de séparation (14) étant agencé de sorte à être en amont du prisme sur le trajet du faisceau émis par ledit laser en direction du prisme (11),
- envoi d'un faisceau lumineux (L) par le laser de la station totale, ledit faisceau venant frapper l'organe séparateur de faisceau (14) de la mire, l'organe séparateur de faisceau séparant ledit faisceau incident (L) entre un premier faisceau (L1) dirigé vers le prisme (11) et un second faisceau (L2) dirigé vers le capteur angulaire (12) et renvoyant le faisceau (R1) réfléchi par le prisme (11) vers la station totale parallèlement au faisceau incident,
- à partir du faisceau (R1) réfléchi par le prisme (11) et de la mesure réalisée par le capteur angulaire (12), calcul des coordonnées du tunnelier et des angles de lacet et de tangage du tunnelier, et
- mesure de l'angle de roulis du tunnelier au moyen de l'inclinomètre (13),
- à partir des coordonnées du tunnelier et des angles de lacet, de tangage et de roulis, détermination de la position et de l'orientation du corps de tunnelier,
- détermination d'une déviation de la position et de l'orientation du corps de tunnelier par rapport à une position et une orientation théoriques par le calculateur.

## Patentansprüche

1. Vorrichtung zur Führung einer Tunnelbohrmaschine (1), umfassend:
• einen Körper einer Tunnelbohrmaschine,
• eine starr mit dem Körper der Tunnelbohrmaschine verbundene Messlatte (10), umfassend :
- ein Prisma (11) , das so angeordnet ist, dass es einen einfallenden Strahl so reflektiert, dass der reflektierte Strahl parallel zum einfallenden Strahl ist,
- einen Winkelsensor (12), und
- ein optisches Strahlteilerorgan (14), das so beschaffen ist, dass es einen einfallenden Strahl in zwei Strahlen mit derselben Form wie der einfallende Strahl und mit divergierenden Richtungen aufteilt, wobei das Strahlteilerorgan so angeordnet ist, dass es den einfallenden Strahl (L) in einen ersten Strahl (L1), der auf das Prisma (11) gerichtet ist, und einen zweiten Strahl (L2), der auf den Winkelsensor (12) gerichtet ist, aufteilt und den von dem Prisma (11) reflektierten Strahl (R1) parallel zu dem einfallenden Strahl zurückwirft,
• eine an einem Tunnelring installierte Totalstation, umfassend einen Verfolgungs- und/oder Entfernungsmesslaser, der so konfiguriert ist, dass er das Prisma und den Winkelsensor anvisiert, wobei das Strahlteilerorgan der Messlatte im Vorfeld des Prismas im Weg des vom Laser emittierten Strahls angeordnet ist, wobei die Totalstation so konfiguriert ist, dass sie eine Position des Prismas bestimmt, und der Winkelsensor so konfiguriert ist, dass er einen Gierwinkel und einen Nickwinkel des Körpers der Tunnelbohrmaschine mittels desselben Anvisierens des Prismas durch den Laser bestimmt,
• einen Neigungsmesser (13), der an dem Körper der Tunnelbohrmaschine angebracht ist, wobei der Neigungsmesser so konfiguriert ist, dass er den Rollwinkel des Körpers misst,
• einen Rechner, der konfiguriert ist um:
- aus den Gier-, Nick- und Rollwinkeln des Körpers der Tunnelbohrmaschine und der Prismenposition eine Position und Orientierung des Körpers der Tunnelbohrmaschine zu bestimmen, und
- eine Abweichung der Position und der Orientierung des Tunnelbohrmaschinen-Körpers von einer theoretischen Position und Orientierung zu bestimmen.

2. Führungsvorrichtung nach Anspruch 1, **dadurch gekennzeichnet, dass** das Strahlteilerorgan ein Trennblatt ist.

3. Führungsvorrichtung nach Anspruch 1, **dadurch gekennzeichnet, dass** das Strahlteilerorgan ein Prisma ist, das dazu geeignet ist, einen einfallenden Strahl in zwei symmetrische Strahlen zu teilen.

4. Vorrichtung nach einem der Ansprüche 1 bis 3, **dadurch gekennzeichnet, dass** der Laser zur Verfolgung und/oder Entfernungsmessung der Totalstation eine Leistung aufweist, die kleiner oder gleich der Leistung eines Lasers der Klasse 2 ist.

5. Verfahren zum Führen einer Tunnelbohrmaschine, bei dem die Führungsvorrichtung nach einem der Ansprüche 1 bis 4 eingesetzt wird, die die folgenden Schritte umfasst:
- Installation der Totalstation (20) auf einem Ring (2) des Tunnels in einer bekannten Position,
- Installation der Messlatte (10) und des Neigungsmessers (13) auf der Tunnelbohrmaschine (1), so dass die Messlatte (10) von dem Laser, mit dem die Totalstation (20) ausgestattet ist, anvisiert werden kann, wobei das Strahlteilerorgan (14) so angeordnet ist, dass es sich vor dem Prisma auf dem Weg des Strahls befindet, der von dem Laser in Richtung des Prismas (11) ausgesendet wird,
- Aussenden eines Lichtstrahls (L) durch den Laser der Totalstation, wobei der Strahl auf das Strahlteilerorgan (14) der Messlatte trifft, wobei das Strahlteilerorgan den einfallenden Strahl (L) in einen ersten Strahl (L1), der auf das Prisma (11) gerichtet ist, und einen zweiten Strahl (L2), der auf den Winkelsensor (12) gerichtet ist, aufteilt und den vom Prisma (11) reflektierten Strahl (R1) parallel zum einfallenden Strahl zur Totalstation zurücksendet,
- Berechnung der Koordinaten der Tunnelbohrmaschine und der Gier- und Nickwinkel der Tunnelbohrmaschine aus dem von dem Prisma (11) reflektierten Strahl (R1) und der von dem Winkelsensor (12) durchgeführten Messung" und
- Messung des Rollwinkels der Tunnelbohrmaschine mit dem Neigungsmesser (13),
- Bestimmung der Position und Ausrichtung des Körpers der Tunnelbohrmaschine aus den Koordinaten der Tunnelbohrmaschine und den Gier-, Nick- und Rollwinkeln,
- Bestimmung einer Abweichung der Position und Orientierung des Körpers der Tunnelbohrmaschine von einer theoretischen Position und Orientierung durch den Rechner.

## Claims

1. Guiding device for a tunnel boring machine (1), comprising
• a tunnel boring machine body,
• a sight (10) rigidly connected to the body of the tunnel boring machine, comprising :
- a prism (11) arranged to reflect an incident beam so that the reflected beam is parallel to the incident beam,
- an angle sensor (12), and
- an optical beam splitter (14) adapted to split an incident beam into two beams of the same shape as the incident beam and of divergent directions, said beam splitter being arranged to split the incident beam (L) into a first beam (L1) directed towards the prism (11) and a second beam (L2) directed towards the angle sensor (12) and to return the beam (R1) reflected by the prism (11) parallel to the incident beam,
• a total station installed on a ring of a tunnel, comprising a tracking and/or distance measuring laser configured to aim at the prism and the angle sensor, the beam splitter of the sight being arranged upstream of the prism in the path of the beam emitted by the laser, said total station being configured to determine a position of the prism and the angle sensor being configured to determine a yaw angle and a pitch angle of the body of the tunnel boring machine by means of the same aiming of the prism by the laser,
• an inclinometer (13) mounted on the body of the tunnel boring machine, said inclinometer configured to measure the roll angle of said body,
• a computer configured for:
- determine, from the yaw, pitch and roll angles of the body of the tunnel boring machine and the position of the prism, a position and orientation of the body of the tunnel boring machine, and
- determine a deviation of the position and orientation of the body of the tunnel boring machine from a theoretical position and orientation.

2. A guide device according to claim 1, **characterized in that** the beam splitter is a splitter blade.

3. A guiding device according to claim 1, **characterized in that** the beam splitter is a prism adapted to split an incident beam into two symmetrical beams.

4. Device according to any of claims 1 to 3, **characterized in that** the tracking and/or distance measuring laser of the total station has a power less than or equal to the power of a class 2 laser.

5. A method of guiding a tunnel boring machine implementing the guiding device according to any of claims 1 to 4, comprising the steps of:
- installation of the total station (20) on a ring (2) of the tunnel, in a known position,
- installation of the sight (10) and the inclinometer (13) on the tunnel boring machine (1), so that the sight (10) can be aimed by the laser equipping the total station (20), the separating member (14) being arranged so as to be upstream of the prism on the path of the beam emitted by said laser towards the prism (11),
- sending of a light beam (L) by the laser of the total station, said beam striking the beam splitter (14) of the sight, the beam splitter splitting said incident beam (L) between a first beam (L1) directed towards the prism (11) and a second beam (L2) directed towards the angle sensor (12) and returning the beam (R1) reflected by the prism (11) towards the total station parallel to the incident beam,
- from the beam (R1) reflected by the prism (11) and the measurement made by the angle sensor (12), calculation of the coordinates of the tunnel boring machine and the yaw and pitch angles of the of tunnel boring machine, and
- measurement of the roll angle of the tunnel boring machine by means of the inclinometer (13),
- from the coordinates of the tunnel boring machine and the yaw, pitch and roll angles, determination of the position and orientation of the body of the tunnel boring machine,
- determination of a deviation of the position and orientation of the body of the tunnel boring machine from a theoretical position and orientation by the computer.
